# EUROPÄISCHE PATENTSCHRIFT

(11) **EP 0 556 688 B1**
(45) Veröffentlichungstag und Bekanntmachung des Hinweises auf die Patenterteilung: **06.12.1995**
(21) Anmeldenummer: 93101953.3
(22) Anmeldetag: 08.02.1993
(51) Int. Cl.: C08B 15/06, C08B 13/00, C08B 31/00, C08F 8/44, C08F 8/32

(54) **Verfahren zur Herstellung von Ammoniumgruppen enthaltenden Polymeren**
Process for producing ammonium groups containing polymers
Procédé de préparation de polymères contenant des groupes ammonium

(30) Priorität: 21.02.1992 DE 4205281
(43) Veröffentlichungstag der Anmeldung: 25.08.1993
(73) Patentinhaber: Wolff Walsrode Aktiengesellschaft, D-29655 Walsrode (DE)
(72) Erfinder: Buysch, Hans-Josef, Dr., W-4150 Krefeld (DE); Arlt, Dieter, prof.Dr., W-5000 Köln 80 (DE); Szablikowski, Klaus, Dr., W-3030 Walsrode (DE)
(74) Vertreter: Braun, Rolf, Dr.

(56) Entgegenhaltungen:
- EP-A- 0 367 003

## Beschreibung

Vorliegende Erfindung betrifft ein Verfahren zur Herstellung von Ammoniumgruppen enthaltenden Polymeren durch Umsetzungen von OH-Gruppen tragenden Polymeren mit Isocyanaten der allgemeinen Formel I,

OCN-R-CH₂-X I

worin R C₂- bis C₁₁-Alkylen oder Arylen und X Halogen darstellt, zu Urethanen und anschließend mit tertiären aliphatischen Aminen der Formel II 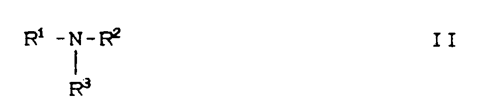
worin R¹ bis R³ gleich oder verschieden sein können und C₁ bis C₈-Alkyl, Hydroxyalkyl, Cyanalkyl, Alkenyl, Aralkyl oder Alkylen unter Ringbildung mit dem N-Atom bedeuten, zu quartären Urethanammoniumverbindungen.

Es ist bekannt, OH-funktionelle Polymere in solche mit Ammoniumgruppen zu überführen. Die Herstellung solcher Produkte ist bisher unbefriedigend gelöst. Mehrere Verfahren sind vorgeschlagen worden, die in der Regel zu niedrigen Substitutionsgraden führen. Nach der EP-A 367 003 (siehe auch dort zitierte Literatur) z.B. kann man zwar hochsubstituierte Polysaccharide erhalten. Das dort beschriebene Verfahren erfordert jedoch drei nacheinander zu vollziehende polymeranaloge Umsetzungen mit entsprechendem Material-, Zeit- und Aufarbeitungsaufwand.

Es wurde nun gefunden, daß OH-funktionelle Polymere sich auf einfache Weise zuerst mit Isocyanaten der Formel I zu Urethanen und diese dann mit tertiären aliphatischen Aminen der Formel II zu Ammoniumgruppen tragenden Polymeren umsetzen lassen, wobei die Reaktionen eindeutig mit hoher Reagenzausbeute und ohne Mitverwendung von großen Mengen an Hilfsreagenzien verlaufen.

Geeignete OH-gruppenhaltige Polymere sind z.B. Polyvinylalkohole, Polyacrylate, die unter Verwendung von OH-Gruppen tragenden Monomeren wie β-Hydroxyethyl(meth)-acrylat hergestellt wurden, besonders aber Polysaccharide, Stärke, Dextrine, Glycogen, Polyglycosane wie Cellulose und deren Derivate, z.B. Methylcellulose, Hydroxyethylcellulose, Hydroxypropylcellulose, gemischte Celluloseether wie Methylhydroxyethylcellulosen, Methylhydroxypropylcellulose, Hydroxyethylhydroxypropylcellulose, Sulfoethylcellulose, Sulfoethylcarboxymethylcellulose, Methylsulfoethylcellulose, Hydroxyethylsulfoethylcellulose, Dehydroxypropylcellulose Dihydroxypropylhydroxyethylcellulose, Dihydroxypropylcarboxymethylcellulose, Carboxymethylcellulose, deren Ester und Salze wie Natrium-, Kalium-, Calcium- und Ammoniumionen, Carboxymethylhydroxyethylcellulose, Cellulosesulfat, Polyfructosane wie Inulin und Graninin, Polymannosane, Polygalactosane, auch gemischte Polysaccharide wie Hemicellulosen, ferner Polyxylosane, Polyarabiosane sowie auch Heteropolysaccharide wie Gellan, Xanthan und Pullulan.

Bevorzugt sind Cellulose und ihre Derivate, Stärke und Dextrine, besonders bevorzugt Cellulose, Methylcellulose, Hydroxyethylcellulose, Hydroxypropylcellulose und Stärke.

Geeignete Isocyanate sind solche der Formel I

OCN-R-CH₂-X I

worin R C₂- bis C₁₁-Alkylen und Arylen, bevorzugt C₂-bis C₆-Alkylen und X Halogen, bevorzugt Chlor, beispielsweise 2-Chlorethylisocyanat*, 3-Chlorpropylisocyanat, 4-Chlorbutylisocyanat, 5-Chlorpentylisocyanat, 6-Chlorhexylisocyanat*, 7-Chlor-heptylisocyanat, 8-Chloroctylisocyanat, o-, m-, p-Chlormethylphenylisocyanat, p-Chlor-o-methylphenylisocyanat oder die entsprechenden Bromverbindungen.
* sind bevorzugt

Diese Verbindungen werden hergestellt durch Phosoenierung der entsprechenden halogenalkylamin-Hydrohalogenide oder der entsprechenden Aminoalkohole, also z.B. 2- Chlorethylisocyanat aus 2-Chlorethylamine-hydrochlorid oder aus Ethanolamin durch Phosgenierung (vergleiche Anm. 562, 75 ff, 1949). Die Reagenzausbeute bei der Umsetzung mit den Isocyanaten liegt sehr hoch, da die Reaktion eindeutig verläuft und Überschüsse nach Auswaschen direkt oder gegebenenfalls nach destillativer Reinigng wieder verwendet werden können.

Die Umsetzung der Isocyanate der Formel I mit den OH-gruppenhaltigen Polymeren erfolgt in Lösung oder Dispersion, wobei die Polysaccharide bevorzugt in Suspension eingesetzt werden, weil sie sehr hochviskose Lösungen bilden, die nur geringe Feststoffgehalte erlauben und damit großen Reaktionsraum und umständliche Aufarbeitung erfordern.

Geeignete Lösungs- und Dispersionsmittel sind inert unter den Reaktionsbedingungen. Genannt seien beispielsweise Kohlenwasserstoffe wie Cyclohexan, Pentan, Heptan, Isooctan, Benzol, Toluol, Halogenkohlenwasserstoffe wie Methylenchlorid, Chloroform, Dichlorethan, Trichlorethylen, Ether wie Diethyl-, Diisopropyl-, Dibutylether, Dioxan, Anisol, Dimethoxyethan, Ester wie Essigsäureethylester, -butylester, Propionsäureethylester, Benzoesäureethylester, Ketone wie Aceton, Methylethylketon, Diethylketon, Methylisopropylketon, Cyclohexanon, Acetophenon, Amide wie Dimethylformamid, Dimethylacetamid, Tetramethylharnstoff, N,N-Dimethylethylenharnstoff, N-Methylpyrrolidon, N-Methylcaprolactam, Nitrile wie Acetonitril, Propionitril, Benzonitril, β-Methoxypropionitril und β-Cyano-β'-methoxy-diethylether.

Die Reaktionstemperatur liegt bei 0 bis 120°C, vorzugsweise 10 bis 110°C, bevorzugt 15 bis 100°C.

Die Ausgangsprodukte und Lösungs- beziehungsweise Dispersionsmittel sollten im wesentlichen wasserfrei sein, damit möglichst wenig Nebenreaktionen der Isocyanate mit Wasser erfolgen.

Das OH-gruppenhaltige Polymer wird in der Regel vorgelegt im entsprechenden Medium und das Isocyanat als solches oder auch in Lösungsmittel gelöst zudosiert, wobei sowohl für die polymeranaloge Umsetzung wie das Isocyanat ein und dasselbe Medium verwendet werden kann. Die Reaktionszeit beträgt zwischen 30 min und mehreren Stunden.

Die Isocyanataddition an die OH-funktionellen Polymere verläuft in der Regel langsam, so daß sie zweckmäßig katalysiert wird. Als Katalysatoren werden die bei der Urethanbildung aus Isocyanaten und Alkoholen üblicherweise verwendeten Katalysatoren in den vorgeschlagenen Mengen (siehe Houben-Weyl, Bd. E 20, 1604 ff 1987) eingesetzt. Besonders bevorzugte Katalysatoren sind organische Zinnverbindungen wie Dibutylzinndilaurat oder Zinndilaurat.

Die Molverhältnisse von einer Polymereinheit mit 1 OH-Funktion zu Isocyanat betragen in der Regel 1:0,1 bis 1:100, vorzugsweise 1:0,5 bis 1:80, besonders bevorzugt 1:0,8 bis 1:50.

Nach der Reaktion des OH-funktionellen Polymeren mit dem Isocyanat der Formel I kann das urethanhaltige Polymer isoliert und gereinigt werden oder aber auch direkt mit Aminen umgesetzt werden. Die Isolierung erfolgt durch Filtration oder Zentrifugation aus der Suspension. Gereinigt wird durch Waschen mit dem verwendeten oder anderen Lösungsmitteln, wobei auch Alkohole verwendet werden können, falls ein Überschuß des eingesetzten Isocyanats nicht mehr verwendet werden kann.

Die Umsetzung des urethanfunktionellen Polymeren mit dem tertiären Amin II erfolgt in den gleichen Lösungs- beziehungsweise Dispersionsmedien, in den gleichen Molverhältnissen, bei gleichen Temperaturen und in gleichen Zeiten wie die des OH-funktionellen Polymeren mit dem Isocyanat. Auch die Aufarbeitung und Reinigung wird in analoger Weise durchgeführt.

Geeignete tertiäre Amine sind solche der Formel II, 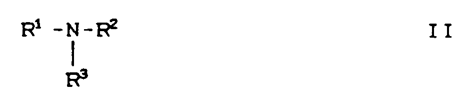
worin R¹ bis R³ gleich oder verschieden sein können und C₁- bis C₈-Alkyl, bevorzugt C₁ bis C₃-Alkyl; C₅- bis C₆-Cycloalkyl, bevorzugt Cyclohexyl; C₂- bis C₆-Hydroxyalkyl, bevorzugt Hydroxyethyl und Hydroxypropyl; C₂- bis C₄-Cyanalkyl, bevorzugt Cyanethyl; C₃- bis C₈-Alkenyl, bevorzugt Allyl und Methallyl; C₇- bis C₈-Aralkyl, bevorzugt Benzyl und R¹ mit R² C₂- bis C₅-Alkylen unter Ringbildung mit dem N-Atom, bevorzugt C₄-und C₅-Alkylen unter Bildung des Pyrrolidin- und Piperidinringes, genannt seien beispielsweise* Trimethylamin, Triethylamin, Dimethyl-benzylamin, Dimethylcyclohexylamin, N,N-Dimethyl-ethanolamin, N-Methyldiethanolamin, Triethanolamin, Tripropylamin, Tributylamin, Dimethyl-butylamin, N,N-Diethylethanolamin, N,N-Dimethylpropanolamin, N-Methyldipropanolamin, N-Methylpiperidin, N-Methylpyrrolidin, N,N-Dimethyl-cyanethylamin.
* unterstrichene sind bevorzugt

Kationisch funktionalisierte Polymere sind begehrt als Hilfsmittel für die Papierfabrikation, Ausgangspunkt für die Herstellung hochaktiver Filtermaterialien, die im medizinischen Bereich und in der Nahrungsmittelindustrie Verwendung finden und auch als Zusätze zu hygienischen und kosmetischen Reinigungs- und Pflegemitteln, ferner als Flockungsmittel bei der Abwasserreinigung.

### Beispiel 1

200 g einer handelsüblichen Hydroxyethylcellulose mit einem Substitutionsgrad (DS) von 1,1 wurden in 1 l Methylenchlorid suspendiert, mit 100 g 6-Chlorhexylisocyanat und 1 g Desmorapid SO* als Katalysator versetzt und 24 h bei 40 bis 45°C erwärmt. nach Absaugen, Waschen mit Methylenchlorid und Isopropanol und Trocknen bei 50°C im Vakuum erhielt man 235 g Urethancellulose mit einer starken Bande bei 1720 cm⁻¹ im IR-Spektrum und einem N-Gehalt von 2,0 %.
* handelsüblicher Zinnkatalysator der Bayer AG für Umsetzungen von Isocyanaten mit Alkoholen

### Beispiel 2

Beispiel 1 wurde wiederholt mit 200 g statt 100 g 6-Chlorhexylisocyanat. Man erhielt 295 g einer Urethancellulose mit einer sehr starken Bande bei 1720 cm⁻¹ im IR-Spektrum und einem N-Gehalt von 3,1 %.

### Beispiel 3

50 g der Urethancellulose aus Beispiel 1, 80 g Triethanolamin und 300 ml Toluol wurden 10 h bei 90°C gerührt, abgesaugt, mehrmals mit Isopropanol gewaschen und im Vakuum bei 50°C getrocknet. Man erhielt 53 g einer kationischen Cellulose mit einem Gehalt an N und Cl von je 2,7 bis 2,8 %.

### Beispiel 4

50 g der Urethancellulose aus Beispiel 2, 50 g N,N-Dimethylethanolamin und 400 ml Toluol wurden 12 h bei 80°C gerührt. Nach Aufarbeitung wie im Beispiel 3 erhielt man 56 g einer kationischen Cellulose mit einem N-Gehalt von 4,8 % und einem Cl-Gehalt von 5,1 %.

## Patentansprüche

1. Verfahren zur Herstellung von Ammoniumgruppen enthaltenden Polymeren, dadurch gekennzeichnet, daß man OH-funktionelle Polymere zuerst mit Isocyanaten der Formel I
OCN-R-CH₂-X I
worin R C₂- bis C₁₁-Alkylen oder Arylen und X Halogen darstellt, zu Urethanen und anschließend mit tertiären aliphatischen Aminen der Formel II 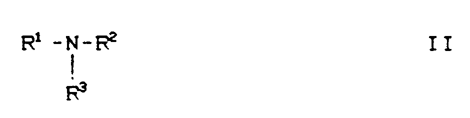 worin R¹ bis R³ gleich oder verschieden sein können und C₁ bis C₈-Alkyl, C₅- und C₆-Cycloalkyl, C₂- bis C₆-Hydroxyalkyl, C₂- bis C₄-Cyanalkyl, C₃- bis C₈-Alkenyl, C₇- bis C₈-Aralkyl und R¹ mit R² bis C₅-Alkylen unter Bildung eines 3- bis 6-gliedrigen Ringes zusammen mit dem N-Atom bedeutet, umsetzt.

## Claims

1. A process for the production of polymers containing ammonium groups, characterized in that OH-functional polymers are first reacted with isocyanates corresponding to formula I:
OCN-R-CH₂-X I
in which R represents C₂₋₁₁ alkylene or arylene and X represents halogen, to form urethanes and the urethanes are subsequently reacted with tertiary aliphatic amines corresponding to formula II: 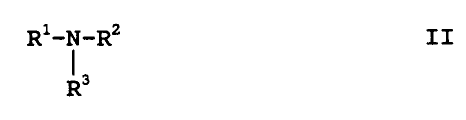 in which R¹ to R³ may be the same or different and represent C₁₋₈ alkyl, C₅ and C₆ cycloalkyl, C₂₋₆ hydroxyalkyl, C₂₋₄ cyanoalkyl, C₃₋₈ alkenyl, C₇₋₈ aralkyl, and R¹ and R² represent up to C₅ alkylene and form a 3- to 6-membered ring with the nitrogen atom.

## Revendications

1. Procédé pour la préparation de polymères contenant des groupes ammonium, caractérisé en ce qu'on fait réagir des polymères OH fonctionnels d'abord avec des isocyanates de formule I
OCN-R-CH₂-X I
dans laquelle R représente un groupe alkylène en C₂-C₁₁ ou un groupe arylène et X représente un atome d'halogène, pour obtenir des uréthannes, et ensuite avec des amines aliphatiques tertiaires de formule II 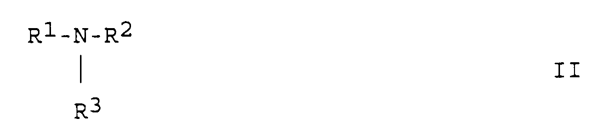 dans laquelle R¹ à R³ peuvent être identiques ou différents et représentent un groupe alkyle en C₁-C₈, un groupe cycloalkyle en C₅-C₆, un groupe hydroxyalkyle en C₂-C₆, un groupe cyanalkyle en C₂-C₄, un groupe alcényle en C₃-C₈, un groupe aralkyle en C₇-C₈, et R¹ représente avec R² un groupe alkylène en C₂-C₅ en formant un noyau triangulaire à hexagonal avec l'atome N.
